Europäisches Patentamt

European Patent Office

Office européen des brevets

(19)

(11) Veröffentlichungsnummer: **0 195 130 B1**

(12) **EUROPÄISCHE PATENTSCHRIFT**

(45) Veröffentlichungstag der Patentschrift: **20.02.91**

(51) Int. Cl.⁵: **G01D 5/34**, G01D 5/36, G01D 5/245

(21) Anmeldenummer: **85116417.8**

(22) Anmeldetag: **21.12.85**

(54) **Positionsmesseinrichtung.**

(30) Priorität: **19.03.85 DE 3509871**

(43) Veröffentlichungstag der Anmeldung:
**24.09.86 Patentblatt 86/39**

(45) Bekanntmachung des Hinweises auf die
Patenterteilung:
**20.02.91 Patentblatt 91/08**

(84) Benannte Vertragsstaaten:
**AT CH DE FR GB IT LI NL SE**

(56) Entgegenhaltungen:
**DE-A- 1 814 785**
**DE-A- 2 720 195**
**DE-A- 3 406 714**

**M.C. HUTLEY: "Diffraction gratings", 1982,**
**Seiten 300-301, Academic Press, London, GB**

(73) Patentinhaber: **Dr. Johannes Heidenhain GmbH**
**Postfach 1260**
**D-8225 Traunreut(DE)**

(72) Erfinder: **Nelle, Günther, Dr. Ing.**
**Eichenweg 12**
**D-8221 Bergen(DE)**

## Beschreibung

Die Erfindung bezieht sich auf eine Positionsmeßeinrichtung nach dem Oberbegriff des Anspruches 1.

Derartige Meßeinrichtungen sind als inkrementale Längen- oder Winkelmeßeinrichtungen bekannt, für die ein definierter Nullpunkt festgelegt und reproduziert werden muß.

In der DE-A-18 14 785 ist der Aufbau einer Einrichtung zum Festlegen einer Bezugsposition durch die Erzeugung eines Referenzimpulses beschrieben. Dieser Referenzimpuls entsteht durch das Abtasten eines unregelmäßigen Strichgitters. Die feinsten Striche dieses Strichgitters sind im allgemeinen so breit wie die Gitterkonstante G der Inkrementalteilung, so daß beim Abtasten dieses unregelmäßigen Strichgitters ein analoges Signal, das in der Triggerebene 360° breit ist, entsteht, wobei die Breite von 360° einer Gitterkonstanten G der Inkrementalteilung entspricht.

Ein genügend exakter Referenzimpuls läßt sich jedoch nur von einer derartigen Referenzmarke ableiten, wenn der Abtastabstand sehr klein ist und dementsprechend engen Toleranzen hinsichtlich der Abstandsschwankungen unterliegt.

Aus dem Buch "Diffraction gratings" von M.C. Hutley, Seiten 300 und 301, Academic Press, London, GB, 1982 ist eine Anordnung bekannt, bei der unter bestimmten Voraussetzungen Gitter durch ein abbildendes Gitter als "Bildgitter" abgebildet werden können.

Der Erfindung liegt die Aufgabe zugrunde, eine Positionsmeßeinrichtung der eingangs genannten Art zu schaffen, bei der die Toleranzen der Schwankungen des Abtastabstandes vergrößert werden können, bei der ein verhältnismäßig großer Abtastabstand zulässig ist, und bei der anhand von Referenzmarken Referenzimpulse erzeugt werden können.

Diese Aufgabe wird mit einer positionsmeßeinrichtung gelöst, die die Merkmale des Anspruches 1 aufweist.

Durch Positionsmeßeinrichtungen mit den Merkmalen der abhängigen Ansprüche wird die Erfindung in besonders vorteilhafter Weise ausgestaltet.

Die besonderen Vorteile der erfindungsgemäßen Positionsmeßeinrichtung liegen darin, daß der Abtastabstand, d.h. der Abstand von den Referenzmarken zu den Abtastelementen größer sein kann als der Abtastabstand dieser Bauteile beim Stand der Technik, wodurch auch die Toleranzen für die Einhaltung des Abtastabstandes größer werden.

Mit Hilfe von Zeichnungen soll die Erfindung anhand von Ausführungsbeispielen noch näher erläutert werden.

Es zeigt

Figur 1     eine schematisierte Auflicht-Längenmeßeinrichtung mit einem Hohlspiegel als abbildendes Element;

Figur 2     eine Maßverkörperung einer Meßeinrichtung mit einer Zylinderlinse als abbildendes Element;

Figur 3     eine Meßeinrichtung mit einer Fresnellinse als abbildendes Element und

Figur 3A    eine Einzelheit A aus Figur 3.

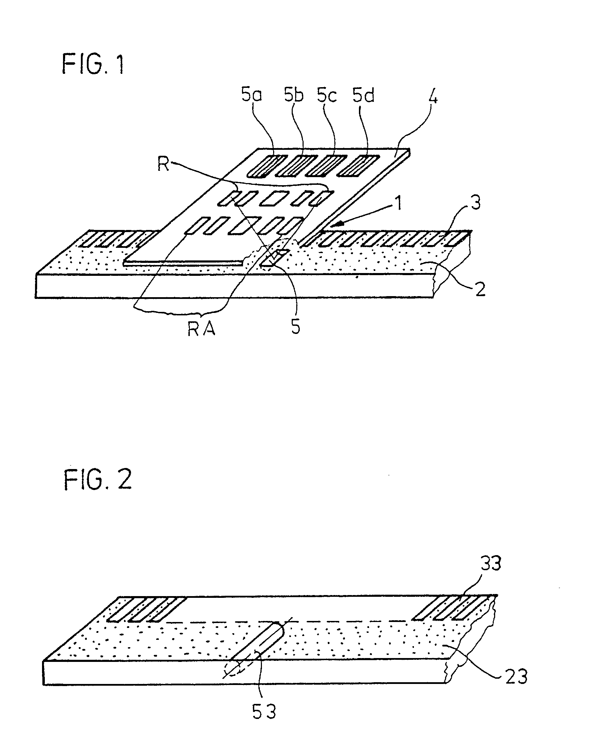

Eine in Figur 1 dargestellte Positionsmeßeinrichtung 1 arbeitet als Auflicht-Längenmeßeinrichtung und weist eine Maßverkörperung 2 mit einer Inkrementalteilung 3 auf, die in bekannter Weise mit Hilfe einer Abtasteinrichtung 4 abgetastet wird. Dazu sind in der Abtasteinrichtung 4 Abtastfelder 5a, 5b, 5c, 5d vorgesehen, die - um jeweils eine viertel Teilungsperiode in Meßrichtung zueinander versetzt - voneinander beabstandet sind. Parallel zu den Abtastfeldern 5a bis 5d sind Teilungsfelder in Form von unregelmäßig verteilten lichtdurchlässigen und undurchlässigen Strichen vorgesehen, die als Einheit eine Referenzmarke R bilden. Der Aufbau ist in der eingangs genannten DE-A 18 14 785 hinreichend beschrieben, so daß sich ein näheres Eingehen hierauf erübrigt. Die Abtastung einer Referenzmarke R wird beim Stand der Technik mit einem Abtastfeld vorgenommen das die identische unregelmäßige Strichverteilung aufweist. Die hierbei zu beachtenden Bedingungen sind in groben Zügen bereits in der Beschreibungseinleitung erörtert und aus dem relevanten Stand der Technik bekannt.

Die erfindungsgemäße Positionsmeßeinrichtung 1 arbeitet nach dem Auflichtverfahren. Eine nicht gezeigte Beleuchtungseinheit beleuchtet die Referenzmarke R, so daß die Strahlung die durchlässigen Bereiche der Abtasteinrichtung 4 durchdringt und auf die Maßverkörperung 2 trifft. An einer Stelle der Maßverkörperung 2, an der eine Bezugsposition festgelegt sein soll, befindet sich ein zylindrischer Hohlspiegel 5. Die Abtasteinrichtung 4 trägt parallel zur Referenzmarke R ein Referenzmarken-Abtastfeld RA. Bei entsprechender Relativstellung von Maßverkörperung 2 und Abtasteinrichtung 4, d.h. wenn die Bezugsposition erreicht ist, wird die durch die Referenzmarke R tretende Strahlung von dem zylindrischen Hohlspiegel 5 auf das Referenzmarken-Abtastfeld RA reflektiert, von zugeordneten Photodetektoren empfangen und als Signal an eine entsprechende Auswerteeinrichtung gegeben. Die Referenzmarke kann auch in sich selbst abgebildet werden. In bekannter Weise wird ein Referenzimpuls erzeugt, durch den in der Auswerteeinrichtung Steuervorgänge ausgelöst werden, z.B. wird ein Digitalzähler auf den Wert "Null" gesetzt.

In Figur 2 wird eine Maßverkörperung 23 einer Durchlicht-Meßeinrichtung dargestellt. Analog zur Beschreibung der Figur 1 weist die Maßverkörperung 23 eine Inkrementalteilung 33 auf. An einer als Bezugsposition definierten Stelle der Maßverkörperung 23 befindet sich eine Zylinderlinse 53 zur Ermittlung der Bezugsposition, die mit Referenzmarken und deren Referenzmarken-Abtastfeldern in der vorbeschriebenen Weise zusammenwirkt.

Im übrigen entspricht diese Anordnung der Figur 1, es sind außer der Variation des abbildenden Elements 53 lediglich die Änderungen vorgenommen, die für eine Durchlicht-Meßeinrichtung gegenüber einer Auflicht-Meßeinrichtung erforderlich sind.

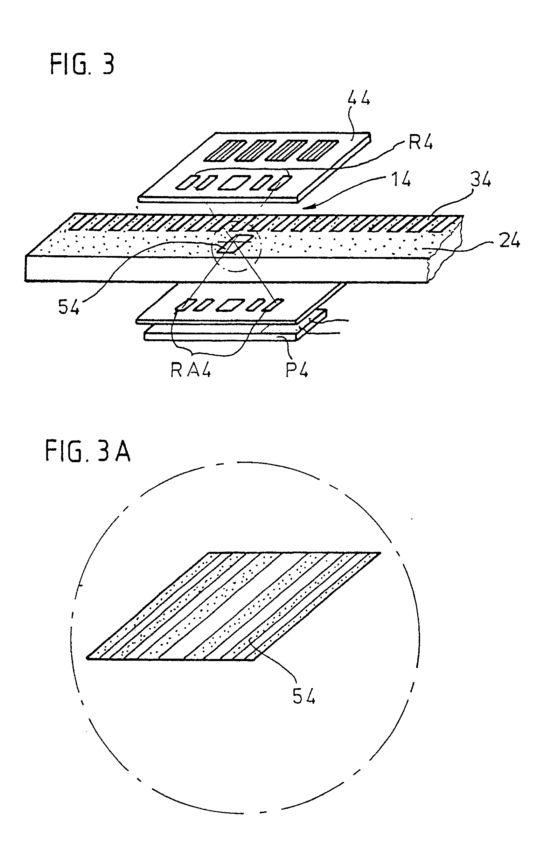

Figur 3 zeigt eine weitere Durchlicht-Variante, bei der als abbildendes Element eine Fresnellinse 54 verwendet wird, die in Figur 3A vergrößert dargestellt ist.

Die sonstige Positionsmeßeinrichtung 14 ist mit ihrem Bauelement Maßverkörperung 24 mit Inkrementalteilung 34, Abtasteinrichtung 44, Referenzmarke R4, zugehörigem Referenzmarken-Abtastfeld RA4 und Photodetektoren P4 sinngemäß wie die Positionsmeßeinrichtung 1 aus Figur 1 aufgebaut.

Die jeweils erforderlichen baulichen Änderungen wird der Fachmann den Erfordernissen entsprechend vornehmen. Selbstverständlich ist die Erfindung auch nicht auf die gezeigten Linearmeßeinrichtungen beschränkt, es können jeweils mehrere abbildende Elemente pro Maßverkörperung vorgesehen werden, und die Maßverkörperung kann selbstverständlich auch Bestandteil einer Winkelmeßeinrichtung sein.

**Ansprüche**

1. Positionsmeßeinrichtung (1,14) zur Messung der Relativlage zweier Objekte, mit wenigstens einer Einrichtung (5,53,54) zum Festlegen einer Bezugsposition, mittels der an der Bezugsposition ein Referenzimpuls auf optischem Weg erzeugt wird, bei der eine Maßverkörperung (2,23,24) an einem der Objekte und wenigstens ein optischer Sender-Empfänger an dem anderen Objekt angeordnet ist, dadurch gekennzeichnet, daß der optische Sender (4, 44) eine Referenzmarke (R, R4) aufweist, daß der optische Empfänger die gleiche Referenzmarke als Referenzmarken-Abtastfeld (RA, RA4) aufweist, und daß an jedem Punkt der Maßverkörperung (2, 23, 24), an der ein Referenzimpuls erzeugt werden soll, ein die Referenzmarke (R) abbildender Spiegel (5) oder eine die Referenzmarke (R, R4) abbildende Linse (53, 54) vorgesehen ist.

2. Positionsmeßeinrichtung nach Anspruch 1 als Auflicht-Meßeinrichtung, dadurch gekennzeichnet, daß der optische Sender-Empfänger eine Abtasteinrichtung (4) für die Maßverkörperung (2) ist, die wenigstens eine Referenzmarke (R) in Form eines Gitters mit unregelmäßiger Strichverteilung und ein entsprechendes Referenzmarken-Abtastfeld (RA) aufweist.

3. Positionsmeßeinrichtung nach Anspruch 1 als Durchlicht-Meßeinrichtung, bei der die Maßverkörperung zwischen dem optischen Sender und dem Empfänger liegt, dadurch gekennzeichnet, daß sich die Referenzmarke (R2) im Sender (42) und das Referenzmarken-Abtastfeld (RA2) im Empfänger spiegelverkehrt gegenüber liegen.

**Claims**

1. Position measuring device (1,14) for measuring the relative position of two objects, with at least one device (5, 53, 54) for determining a reference position, by means of which a reference pulse is generated in optical manner at the reference position, in which a scale unit (2, 23, 24) is arranged on one of the objects and at least one optical emitter-receiver on the other object, characterized in that the optical emitter (4, 44) has a reference mark (R, R4), in that the optical receiver has the same reference mark as reference mark sensing field (RA, RA4), and in that, at each point of the scale unit (2, 23, 24) at which a reference pulse is to be generated there is provided a mirror (5) imaging the reference mark (R) or a lens (53, 54) imaging the reference mark (R, R4).

2. Position measuring device according to claim 1 as incident light measuring device, characterized in that the optical emitter-receiver is a sensing device (4) for the scale unit (2), which comprises at least one reference mark (R) in the form of a grating with irregular line distribution and a corresponding reference mark sensing field (RA).

3. Position measuring device according to claim 1 as transmitted light measuring device, in which the scale unit lies between the optical emitter and the receiver, characterized in that the reference mark (R2) in the emitter (42) and the reference mark sensing field (RA2) in the receiver lie opposite each other as mirror images.

## Revendications

1. Dispositif de mesure de position (1,14) pour mesurer la position relative de deux objets, comprenant au moins un dispositif (5,53,54) pour fixer une position de référence, à l'aide duquel une impulsion de référence est produite par voie optique à la position de référence, une règle de mesure (2,23,24) disposée sur l'un des objets et au moins un émetteur-récepteur optique disposé sur l'autre objet, caractérisé par le fait que l'émetteur optique (4,44) présente une marque de référence (R,R4), que le récepteur optique présente la même marque de référence en tant que champ d'exploration de marque de référence (RA,RA4), et qu'à chaque point de la règle de mesure (2,23,24) auquel doit être produite une impulsion de référence, il est prévu un miroir (5) reproduisant la marque de référence (R) ou une lentille (53,54) reproduisant la marque de référence (R,R4).

2. Dispositif de mesure de position suivant la revendication 1, en tant que dispositif de mesure à réflexion, caractérisé par le fait que l'émetteur-récepteur optique est un dispositif d'exploration (4) pour la règle de mesure (2), dispositif qui présente au moins une marque de référence (R) sous la forme d'une grille à répartition irrégulière des traits et un champ d'exploration de marque de référence (RA) correspondant.

3. Dispositif de mesure de position suivant la revendication 1, en tant que dispositif de mesure par transparence, dans lequel la règle de mesure est située entre l'émetteur optique et le récepteur, caractérisé par le fait que la marque de référence (R4) dans l'émetteur (44) et le champ d'exploration de marque de référence (RA4) dans le récepteur se trouvent face à face de façon symétriquement inversée.

FIG. 1

5a  5b  5c  5d  4

R

1

3

2

RA  5

FIG. 2

33

53  23

## FIG. 3

## FIG. 3 A